# FASCICULE DE BREVET EUROPEEN

(11) **EP 1 382 163 B1**
(45) Date de publication et mention de la délivrance du brevet: **21.03.2007**
(21) Numéro de dépôt: 02735484.4
(22) Date de dépôt: 23.04.2002
(51) Int. Cl.: H04L 12/28

(54) **Dispositif et procédé de mise en relation d'un utilisateur eloigne avec un serveur domestique**
Vorrichtung und Verfahren zur Verbindung zwischen einem entfernten Benutzer und einem Domotik-Server
Device and methods for connecting a remote user with a home server

(30) Priorité: 24.04.2001 FR 0105487
(43) Date de publication de la demande: 21.01.2004
(73) Titulaire: FRANCE TELECOM, 75015 Paris (FR)
(72) Inventeur: BERNARD, Delphine, F-22300 Lannion (FR); BILLON, Gilbert, F-22300 Lannion (FR); DANET, Pierre-Yves, F-22700 Louannec (FR)
(74) Mandataire: Poulin, Gérard
(86) Numéro de dépôt international: PCT/FR2002/001383
(87) Numéro de publication internationale: WO 2002/087164

(56) Documents cités:
- EP-A- 0 943 992
- WO-A-00/36812
- WO-A-01/23994
- WO-A-99/03229
- WO-A-99/34339

## Description

### Domaine de l'invention

La présente invention concerne un dispositif et un procédé de mise en relation d'un utilisateur éloigné avec un serveur domestique. Ce dispositif, ou plate-forme, est capable de mettre en relation un client abonné au service, depuis un site éloigné, avec les équipements Internet raccordés sur le réseau domestique pour les contrôler ou pour connaître leur état.

### Etat de la technique antérieure

Les points d'accès des prestataires de service sur le réseau Internet (ISP) offrent une fonction de réception d'appel pour permettre à un client de se raccorder puis de naviguer sur le réseau Internet. Pour ce faire, un serveur muni d'un ensemble de modems attend les demandes des clients et répond aux appels pour ensuite établir une liaison selon le protocole Internet.

Dans le cadre de l'évolution des télécommunications et de la démocratisation des technologies Internet embarquées, la multiplication des équipements Internet ("Internet appliances") nécessite une gestion bidirectionnelle des communications de manière à ce que les clients puissent contrôler celles-ci à distance.

Pour que les points d'accès des prestataires de service sur le réseau Internet (ISP) offrent la capacité d'initialiser des appels vers les clients il est nécessaire d'introduire une fonction complémentaire aux fonctions existantes.

L'invention a pour objet de résoudre un tel problème.

Un document de l'art connu, la demande de brevet WO 00/36812, décrit un système pour surveiller et gérer une installation domestique. Ce système comprend:
- un réseau public accessible a un dispositif d'accès via un réseau,
- un système d'authentification contenant des informations d'accès relatives aux utilisateurs autorisés,
- un système de connexions utilisateur contenant les paramètres de connexion relatifs à l'installation domestique,
- un interface pour initialiser une connexion sûre pour l'utilisateur autorisé utilisant le dispositif d'accès,
- un noeud de service, qui utilise les paramètres de connexion utilisateur pour commander un serveur de communication pour établir une connexion à un serveur local,
- un tel serveur de communication,
- un réseau de télécommunication,
- une passerelle locale utilisateur,
- un réseau domestique relié à cette passerelle,
- des équipements reliés à ce réseau domestique,
- un dispositif de surveillance,
- un terminal de contrôle.

Un autre document de l'art connu, la demande de brevet WO 99/34339, décrit un contrôleur d'automatisation domestique. Un tel contrôleur situé dans un local est couplé à un terminal central situé à distance au travers d'une ligne. Un tel contrôleur peut être relié à des capteurs et des dispositifs alarme. Le terminal central est relié au réseau téléphonique commuté, à un interface à un réseau de données et à un serveur d'automatisation et de sécurité domestique relié lui aussi au réseau.

### Exposé de l'invention

L'invention concerne un procédé (revendication 1) de mise en relation d'un utilisateur éloigné avec un serveur domestique au moyen des modules logiciels d'un dispositif serveur réseau raccordé d'une part sur un réseau extérieur auquel est connecté cet utilisateur éloigné et d'autre part à un réseau de données auquel est connecté ce serveur domestique, ce serveur domestique étant relié à des capteurs et/ou des actionneurs pour contrôler les équipements d'un réseau domestique, ce procédé comprenant les étapes suivantes pour le sens de l'utilisateur éloigné vers le serveur domestique :
- établissement d'une communication entre cet utilisateur éloigné et ce dispositif serveur réseau,
- à la réception de cet appel par le dispositif serveur réseau, demande d'authentification de l'utilisateur,
- identification par le dispositif serveur réseau des paramètres de cet utilisateur ainsi que son contexte personnel,
- lorsque la liaison est établie, aboutement des liaisons entre l'utilisateur éloigné et le serveur domestique, au travers d'une fonction d'adaptation qui traduit les requêtes de l'utilisateur en des informations compréhensibles par le serveur domestique,
caractérisé en ce que le réseau de données est le réseau Internet et en ce que ce procédé comprend, en outre, les étapes suivantes :
- établissement d'une communication entre le dispositif serveur réseau et le serveur domestique en fonction de l'occupation des lignes et de la priorité de l'appel,
- à la réception d'un appel par le serveur domestique, analyse par celui-ci du numéro de l'appelant et prise de la ligne si ce numéro correspond au numéro du dispositif serveur réseau.

Pour le sens serveur domestique vers dispositif serveur réseau, ce procédé comprend les étapes suivantes (revendication 2):
- lorsqu'un capteur du réseau domestique détecte un problème, transmission d'une demande de connexion au serveur domestique,
- établissement d'une communication vers le dispositif serveur réseau,
- à la réception cet appel par le dispositif serveur réseau, contrôle par celui-ci de l'origine de l'appel,
- acceptation de cet appel en raccrochant éventuellement une communication moins prioritaire si tous les modems sont occupés,
- détermination des adresses vers lesquelles doit être diffusé le message d'alarme et transmission de ce message.

Avantageusement dans ledit procédé, la communication entre le dispositif serveur réseau et le serveur domestique étant établie, l'établissement d'une connexion s'effectue suivant un mode unique quelque soit l'origine de la communication : Le dispositif serveur réseau joue le rôle de serveur PPP (DHCP) et fournit une adresse du protocole Internet au serveur domestique.

Le dialogue entre le dispositif serveur réseau et le serveur domestique s'effectue par échange de messages SMTP dans le sens serveur domestique vers serveur réseau au travers d'une liaison au protocole Internet sur PPP ou de requêtes HTTP et FTP dans le sens serveur réseau vers serveur domestique (revendication 3).

Dans le sens dispositif serveur réseau vers réseau domestique les demandes portent sur trois types d'actions :
- la commande,
- la demande d'état,
- la configuration (revendication 4).

La commande consiste à envoyer par le protocole HTTP une séquence permettant de désigner un équipement domestique de façon unique ainsi que le descriptif de la commande associée.

La demande d'état consiste à envoyer par le protocole FTP une commande GET du (ou des) fichier(s) du serveur domestique comportant l'état des différents équipements communicants du réseau domestique.

La configuration consiste à envoyer par le protocole FTP (PUT) un ou plusieurs nouveaux fichiers de configuration.

Dans le sens serveur domestique vers dispositif serveur réseau, les demandes portent plus particulièrement sur deux types d'actions :
- la notification d'évènements relatifs au réseau domestique,
- l'accusé de réception (revendication 5).

La notification consiste à envoyer par le protocole SMTP une séquence permettant de désigner un équipement domestique ainsi que le descriptif de la notification associée.

L'accusé de réception consiste à envoyer par le protocole SMTP une séquence permettant de répondre en différé à une commande ou à une demande d'état préalable.

L'invention concerne, en outre, un dispositif serveur réseau (revendication 6) de mise en relation d'un utilisateur éloigné et d'un serveur domestique, relié d'une part au travers d'un réseau extérieur à au moins un utilisateur éloigné et d'autre part au travers d'un réseau de données à au moins un serveur domestique connecté à des capteurs et/ou des actionneurs pour contrôler les équipements d'un réseau domestique, comportant des modules logiciels, ce dispositif comprenant :
- des moyens d'établissement d'une communication entre cet utilisateur éloigné et ce dispositif serveur réseau,
- des moyens de demande d'authentification de l'utilisateur à la réception de cet appel par le dispositif serveur réseau,
- des moyens d'identification par le dispositif serveur réseau des paramètres de cet utilisateur ainsi que son contexte personnel,
- des moyens d'aboutement des liaisons entre l'utilisateur éloigné et le serveur domestique, lorsque la liaison est établie, au travers d'une fonction d'adaptation qui traduit les requêtes de l'utilisateur en des informations compréhensibles par le serveur domestique,
caractérisé en ce que le réseau de données est le réseau Internet, et en ce que le dispositif comprend, en outre :
- des moyens d'établissement d'une communication entre le dispositif serveur réseau et le serveur domestique en fonction de l'occupation des lignes et de la priorité de l'appel,
- des moyens d'analyse par le serveur domestique, à la réception d'un appel par celui-ci, du numéro de l'appelant et de prise de la ligne si ce numéro correspond au numéro du dispositif serveur réseau.

### Brève description des figures

La figure 1 illustre le dispositif de l'invention
La figure 2 illustre le fonctionnement du dispositif de l'invention.
La figure 3 illustre le fonctionnement du procédé de l'invention pour le sens dispositif serveur réseau vers serveur domestique
La figure 4 illustre fonctionnement du procédé de l'invention pour le sens serveur domestique vers dispositif serveur réseau.

### Exposé détaillé de modes de réalisation

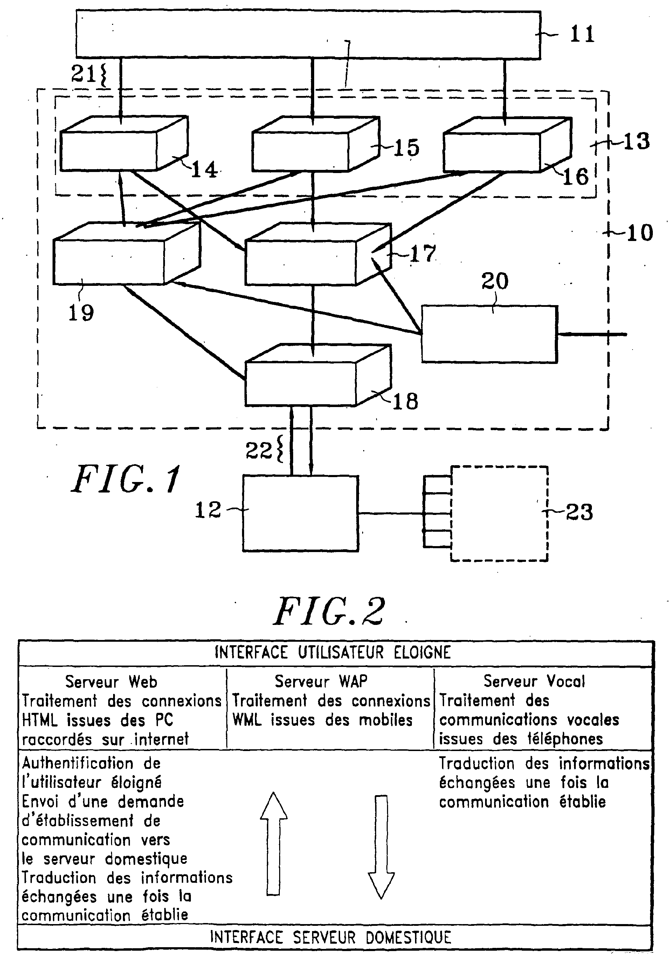

Comme illustré sur la figure 1, le dispositif serveur réseau de l'invention 10, qui permet la mise en relation, d'un utilisateur, ou client, éloigné 11 et d'un serveur domestique 12, comprend :
- d'une part, successivement :
   - une interface multimodale 13 comportant au moins un module de gestion des appels d'utilisateurs éloignés, réalisé ici par un serveur Internet 14, un serveur WAP 15 (serveur accédant au réseau Internet), et un serveur vocal 16,
   - un module de gestion des communications 17 assurant l'authentification et la sécurisation de l'accès ainsi que l'aboutement de la communication entre l'utilisateur éloigné 11 et le serveur domestique 12,
   - un module frontal de communication 18 qui opère la gestion des appels vers les serveurs domestiques 12,
- d'autre part :
   - un module de réception des alarmes 19 en provenance du réseau domestique qui diffuse l'information vers au moins une adresse déterminée,
   - et un module d'exploitation 20, relié aux modules 17 et 19, pour réaliser la gestion et l'administration des paramètres de l'utilisateur, qui offre la possibilité d'ajouter, de consulter, de modifier ou de supprimer des abonnés.

Le dispositif de l'invention est d'une part raccordé sur un réseau externe 21, et d'autre part au réseau Internet 22 au moyen du module frontal de communication 18 de manière à pouvoir établir des communications avec le serveur domestique 12.

L'utilisateur 11 peut se connecter au dispositif de l'invention 10 depuis n'importe quel terminal, par exemple un terminal de type ordinateur personnel (PC) raccordé sur le réseau Internet (via le réseau RTC ou autre), ou depuis un mobile WAP (accédant au réseau Internet) ou depuis un téléphone (vocal) sans avoir à modifier ses paramètres d'accès.

Les modules 13 de gestion des appels utilisateurs traitent les différentes requêtes de l'utilisateur 11 pour les présenter dans un protocole compréhensible par le module de gestion des communications 17.

Le module de gestion des communications 17 assure l'authentification de l'utilisateur éloigné 11 et la sécurité, traduit les informations dans un protocole compréhensible par le serveur domestique 12.

Le module frontal de communication 18 gère l'établissement et la rupture des communications entre le dispositif 10 et le serveur domestique 12. Ce module remplit une fonction de modem.

Le module de gestion et d'administration des paramètres de l'utilisateur 20 joue le rôle d'interface homme-machine (IHM) permettant l'exploitation du dispositif de l'invention 10.

Le serveur domestique 12 est relié à des capteurs et/ou des actionneurs permettant de contrôler des équipements d'un réseau domestique 23.

Le dispositif de l'invention 10 comprend des moyens de gestion des appels permettant d'allouer dynamiquement les modems 14, 15, 16 en fonction de leur occupation et si besoin de reporter des établissements de liaison non prioritaires lorsque tous les modems sont utilisés.

Le dispositif de l'invention comprend des moyens logiciels ou moyens matériels permettant de gérer les conflits possibles entre les appels entrants et les appels sortants et des moyens permettant d'être configuré et supervisé via une interface homme-machine locale ou déportée.

Le dispositif de l'invention comprend des moyens de réception de courrier électronique et de diffusion vers plusieurs adresses pré-configurées (SMS pour mobile, vocal ou ordinateur personnel).

La figure 2 illustre le fonctionnement du dispositif de l'invention 10. Le dispositif de l'invention 10 permet la mise en relation d'un utilisateur éloigné 11 et d'un serveur domestique 12 au travers de plusieurs interfaces physiques.

Dans le sens utilisateur éloigné 11 vers serveur domestique 12, il y a successivement :
- authentification dudit utilisateur 11,
- envoi d'une demande d'établissement de communication vers ledit serveur domestique 12,
- traduction des informations échangées une fois la communication établie.

Dans l'autre sens il y a :
- traduction des informations échangées une fois la communication établie.

Le réseau externe 21 peut être le réseau téléphonique commuté (RTC), qui offre un service d'identification de l'appelant qui permet au dispositif de l'invention de s'assurer de l'identité de l'appelant comme décrit dans la demande de brevet WO 99/03229.

Ce réseau externe 21 peut également être pris parmi les réseaux suivants : réseau numérique à intégration de services (RNIS), réseau xDSL ("Digital Subscriber Line"), réseau GSM ("Global Service Mobile"), réseau DCS 1800, réseau UMTS ("Universal Mobile Telecommunication System").

### Commande des équipements domestiques

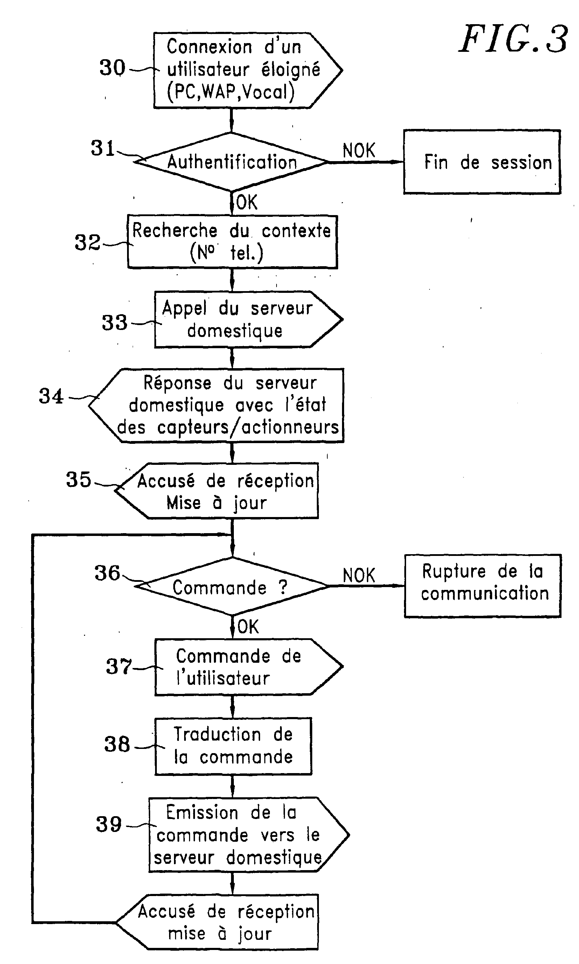

La figure 3 illustre le fonctionnement du procédé de mise en relation d'un utilisateur éloigné 11 et d'un serveur domestique 12 pour le sens du dispositif de l'invention 10 vers serveur domestique 12.

Lorsqu'un utilisateur éloigné 11 souhaite communiquer avec un serveur domestique 12, il établit une communication (étape 30) avec le dispositif de l'invention 10 à l'aide d'un téléphone, d'un ordinateur personnel (PC) ou d'un mobile. A la réception de cet appel, le dispositif 10 lui demande de s'authentifier (étape 31) et en fonction de cette authentification, il identifie les paramètres de cet utilisateur (notamment le numéro de téléphone du serveur domestique) ainsi que son contexte personnel (équipements domestiques contrôlables, adresses de diffusion des alarmes, ...) (étape 32).

Une fois cette authentification effectuée par le module de gestion de communication 17, le dispositif passe le relais au module frontal de communication 18 qui engage l'établissement d'une communication avec le serveur domestique 12 en fonction de l'occupation des lignes et de la priorité de l'appel (étapes 33, 34, et 35).

A la réception d'un appel, le serveur domestique analyse le numéro de l'appelant présenté sous le format V.23 (Transmission par modulation à cohérence de phase) et prend la ligne si ce numéro correspond au numéro du dispositif de l'invention (étape 36). Si le numéro de l'appelant reçu est différent de celui du dispositif de l'invention, il ne prend pas la ligne et ainsi n'occasionne pas d'interférence avec les autres services téléphoniques, comme décrit dans la demande de brevet WO 99/03229 qui décrit un dispositif interface entre une installation terminale d'abonné d'un réseau externe et un réseau interne.

Lorsque la liaison est établie, le module de gestion des communications 17 effectue un aboutement des liaisons entre l'utilisateur éloigné 11 et le serveur domestique 12. Cet aboutement est réalisé au travers d'une fonction d'adaptation qui traduit les requêtes de l'utilisateur en des informations compréhensibles par le serveur domestique 12 (étapes 37, 38 et 39).

Cette fonction d'adaptation fait partie intégrante du module de gestion des communications 17 et effectue la traduction bidirectionnelle en fonction des paramètres de l'utilisateur notamment en fonction de la langue utilisée et du format des informations reconnues par le serveur domestique.

### Réception d'une alarme

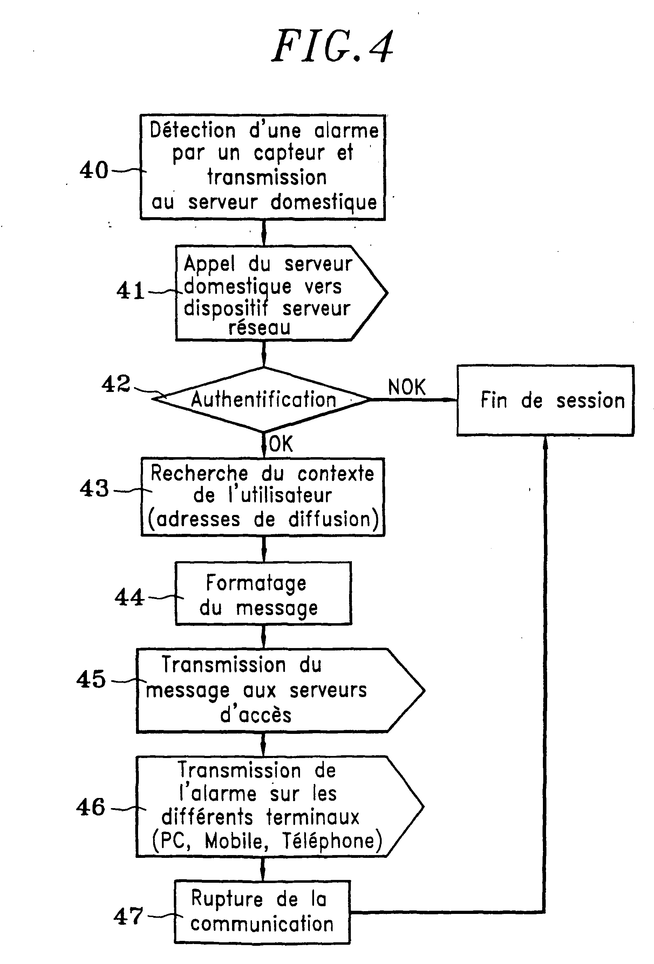

La figure 4 illustre le fonctionnement du procédé de l'invention pour le sens serveur domestique 12 vers dispositif de l'invention (10).

Lorsqu'un capteur du réseau domestique 23 détecte un problème, il transmet une demande de connexion au serveur domestique 12 qui engage l'établissement d'une communication vers le dispositif de l'invention (étapes 40 et 41).

A la réception cet appel, le module frontal de communication 18 effectue un contrôle de l'origine de l'appel et l'accepte en raccrochant éventuellement une communication moins prioritaire si tous les modems sont occupés (étape 42).

L'alarme est alors transmise au module de gestion des communications 17 qui détermine les adresses vers lesquelles doit être diffusé le message d'alarme et transmet ce message vers des serveurs déterminés (étapes 43 à 47).

### Protocole d'échange entre le dispositif serveur réseau 10 et le serveur domestique 12

Ce protocole d'échange entre le dispositif serveur réseau 10 et le serveur domestique 12 permet d'échanger des informations de manière formelle. Il couvre le sens dispositif serveur réseau vers serveur domestique et le sens inverse.

Il présente le format des échanges, dans les deux sens, qui sont portés par les couches du protocole Internet (HTTP, FTP ou SMTP). L'établissement de la communication entre le dispositif de l'invention 10 et le serveur domestique 12 et la gestion de cette communication ne font pas l'objet de la présente invention.

### Principe de fonctionnement

La communication entre le dispositif serveur réseau 10 et le serveur domestique 12 étant établie, l'établissement de la connexion PPP s'effectue suivant un mode unique quelque soit l'origine de la communication : Le dispositif serveur réseau 10 joue le rôle de serveur PPP (DHCP) et fournit une adresse du protocole Internet au serveur domestique 12.

Une authentification PAP est réalisée.

Le dialogue entre le dispositif serveur réseau 10 et le serveur domestique 12 s'effectue par échange de messages SMTP (dans le sens serveur domestique vers serveur réseau) au travers d'une liaison au protocole Internet sur PPP ou de requêtes HTTP et FTP (dans le sens serveur réseau vers serveur domestique).

### Sens dispositif serveur réseau 10 vers serveur domestique 12

Dans le sens dispositif serveur réseau 10 vers réseau domestique 12 les demandes portent sur trois types d'actions :
- la commande,
- la demande d'état,
- la configuration.

### La commande

La commande consiste à envoyer par le protocole HTTP une séquence permettant de désigner un équipement domestique de façon unique ainsi que le descriptif de la commande associée.

Son format est le suivant :

| URL | Commande | Numéro | Type | Information |
|---|---|---|---|---|
| | xxx_exe.htm | 0-255 | 0-31 | Valeur décimale |

avec :
- URL = adresse Internet du serveur domestique 12
- Commande = nom d'exécution de la commande généralement associé au nom du fichier contenant les équipements ou les fonctions désignés.

Exemple: scénario_exe.htm ;
- numéro = numéro d'ordre de déclaration de l'élément pour un type donné,
- type : valeur décimale attribuée par famille d'équipements domestiques (voir tableau récapitulatif ci-après),
- information : valeur décimale attribuée selon l'action (voir tableau récapitulatif ci-après).

Le séparateur utilisé entre les différents champs est le point-virgule. Un exemple de commande peut être le suivant : http://192. 168.112. 102/scenario_exe.htm ;3; 15 ; 1.

### La demande d'état

La demande d'état consiste à envoyer par le protocole FTP une commande GET du ou des fichiers du serveur domestique 12 comportant l'état des différents équipements communicants du réseau local domestique.

Son format est le suivant :

| URL | Commande FTP | Fichier |
|---|---|---|
| | GET | Chaîne de caractères |

avec :
- URL = adresse Internet du serveur domestique.
- Commande = GET (protocole FTP).
- Fichier = nom du (ou des) fichier(s) du serveur domestique comportant l'état des différents équipements communicants du réseau domestique.

### La configuration

La configuration consiste à envoyer par le protocole FTP (PUT) un ou plusieurs nouveaux fichiers de configuration.

Son format est le suivant :

| URL | Commande FTP | Fichier |
|---|---|---|
| | PUT | Chaîne de caractères |

avec :
- URL = adresse Internet du serveur domestique.
- Commande = PUT (protocole FTP).
- Fichier = nom du (ou des) fichier(s) de configuration du serveur domestique concerné, intégrant en particulier les fonctions suivantes :
   - Configuration TCP/IP,
   - Configuration PPP,
   - Configuration des équipements du réseau domestique,
   - Configuration des scénarios,
   - Configuration SMTP (courriers électroniques).

### Sens serveur domestique 12 vers dispositif serveur réseau 10

Dans le sens serveur domestique 12 vers dispositif serveur réseau 10 les demandes portent plus particulièrement sur deux types d'actions .
- La notification d'évènements relatifs au réseau local domestique,
- L'accusé de réception.

### La notification

La notification consiste à envoyer par le protocole SMTP une séquence permettant de désigner un équipement domestique ainsi que le descriptif de la notification associée.

Son format est le suivant :

| | | | | | | | |
|---|---|---|---|---|---|---|---|
| @mail destinataire | sujet | date | heure | paramètre lié au sujet | N° de téléphone du réseau domestique | mot de passe | information |
| | | jj/mm/aaa | hh/mm/ss | | | | |

avec :
- Sujet = Sujet du message
   - Alarme (20 caractères),
   - Notification (20 caractères).
- Paramètre = Chaîne de 20 caractères, par exemple localisation de l'alarme,
- Numéro de téléphone du réseau domestique = Numéro de téléphone relatif au serveur domestique, 10 chiffres,
- Mot de passe = chaîne de 8 caractères,
- Numéro = numéro d'ordre de déclaration de l'élément pour un type donné.

L'information peut aussi, suivant les applications, consister en un fichier de données (image de caméra par exemple) ou toute autre forme de présentation de données (relevés de compteurs, etc.).

### L'accusé de réception

L'accusé de réception consiste à envoyer par le protocole SMTP une séquence permettant de répondre en différé à une commande ou à une demande d'état préalable.

Son format est le suivant :

| @mail destinataire | Sujet | Date | Heure | Paramètre lié au sujet | N° de téléphone du réseau domestique | Mot de passe | type | N° | information |
|---|---|---|---|---|---|---|---|---|---|
| | | jj/mm/aaa | hh/mm/ss | | | | | 0-255 | Valeur décimale |

avec :
- Sujet = Sujet du message
   - Accusé de réception.
- Paramètre = Chaîne de 20 caractères, désignant le nom de la commande ou "Status".
- Numéro de téléphone du réseau domestique = numéro de téléphone relatif au serveur domestique, 10 chiffres.
- Mot de passe = chaîne de 8 caractères.
- Numéro = numéro d'ordre de déclaration de l'élément pour un type donné.
- Type : valeur décimale attribuée par famille d'équipements domestiques (voir le tableau récapitulatif).
- Information : valeur décimale attribuée selon l'état de l'équipement en question (voir le tableau récapitulatif).

L'information peut aussi, suivant les applications, consister en un fichier de données (image de caméra par exemple) ou toute autre forme de présentation de données (relevés de compteurs, etc.).

### Tableau récapitulatif

| Type | |
|---|---|
| 0 : | Caméra |
| 1 : | Lampe |
| 2 : | Volet, roulant |
| 3 : | HVAC (chauffage) |
| 4 : | Ouverture (gâche) |
| 5 : | Détecteur de fuite d'eau |
| 6 : | Centrale d'alarme |
| 7 : | Détecteur d'intrusion |
| 8 : | Détecteur d'effraction |
| 9 | : Détecteur de fumée |
| 10 : | Détecteur d'incendie |
| 11 : | Notification d'entrée/sortie |
| 12 : | Magnétoscope/DVD |
| 13 : | Chaîne Hi-Fi |
| 14 : | Boite de livraison |
| 15 : | Scénario |
| 16 : | Compteur électrique (Compteur Bleu Electronique) |
| 17 : | Compteur gaz |
| 18 : | Compteur eau froide |
| 19 : | Compteur eau chaude |
| 20 | à 31 : Réservés |

Cette liste n'est pas exhaustive et pourra évoluer avec de nouvelles applications.

| Information | | |
|---|---|---|
| Type O : | | |
| CAMERA | INACTIVE | => 0 |
| CAMERA | ACTIVE | => 1 |
| CAMERA | GAUCHE 5° | => 2 |
| CAMERA | DROITE 5° | => 3 |
| CAMERA | HAUT 5° | => 4 |
| CAMERA | BAS 5° | => 5 |
| CAMERA | ZOOM | => 6 |
| CAMERA | ELARGIS | => 7 |

| Type 1 : | | |
|---|---|---|
| LAMPE | ETEINTE | => 0 |
| LAMPE | ALLUMEE | => 1 |
| LAMPE | DIM | => 2 |
| LAMPE | INTERROGATION | => 3 |
| LAMPE | "Variable", ETEINTE | => 5 |
| LAMPE | "Variable", niveau 1 (33%) | => 6 |
| LAMPE | "Variable", niveau 2 (66%) | => 7 |
| LAMPE | "Variable", niveau 3 (100%) | => 8 |

| Type 2 : | | |
|---|---|---|
| VOLET | FERME | => 16 |
| VOLET | OUVERT | => 17 |
| VOLET | STOP | => 18 |

| Type 3 : | | |
|---|---|---|
| CONVECTEUR | CONFORT | => 32 |
| CONVECTEUR | ECO | => 33 |
| CONVECTEUR | HORS GEL | => 34 |
| CONVECTEUR | CONFORT REDUIT | => 35 |

| Type 4 : | | |
|---|---|---|
| LOCK: | INACTIF | =>0 |
| LOCK: | ACTIF | =>1 |

| Type 5 : | | |
|---|---|---|
| EAU: | FERME | => 0 |
| EAU: | OUVERT | => 1 |

| Type 6 : | | |
|---|---|---|
| CENTRALE: | INACTIF | => 0 |
| CENTRALE: | ACTIF | => 1 |
| CENTRALE: | HS | => 2 |

| Type 7 : | | |
|---|---|---|
| INTRUSION: | INACTIF | => 0 |
| INTRUSION: | ACTIF | => 1 |

| Type 8 : | | |
|---|---|---|
| EFFRACTION: | INACTIF | => 0 |
| EFFRACTION: | ACTIF | => 1 |

| Type 9 : | | |
|---|---|---|
| FUMEE: | INACTIF | => 0 |
| FUMEE: | ACTIF | => 1 |

| Type 10 : | | |
|---|---|---|
| INCENDIE: | INACTIF | => 0 |
| INCENDIE: | ACTIF | => 1 |

| Type 11 : | | |
|---|---|---|
| E/S: | INACTIF | => 0 |
| ENTREE: | ACTIF | => 1 |
| SORTIE: | ACTIF | => 2 |

| Type 12 : | | |
|---|---|---|
| DVD: | INACTIF | => 0 |
| DVD: | ACTIF | => 1 |
| DVD: | ENREGISTRE | => 2 |
| DVD: | LECTURE | => 3 |
| DVD: | CHAINE | => Numéro +3 |

| Type 13 : | | |
|---|---|---|
| HIFI: | ETEINTE | |
| HIFI: | ALLUMEE | => 1 |
| HIFI: | ENREGISTRE | => 2 |
| HIFI: | LECTURE | => 3 |
| HIFI: | CHAINE | => Numéro +3 |

| Type 14 : | | |
|---|---|---|
| e-Boîte: | VIDE | => 0 |
| e-Boîte: | PLEINE | => 1 |
| e-Boîte: | OUVERTURE | => 2 |
| e-Boîte: | FERMETURE | => 3 |

| Type 15 : | | |
|---|---|---|
| SCENARIO: | INACTIF | => 0 |
| SCENARIO: | ACTIF | => 1 |

| Type 16 : | | |
|---|---|---|
| CBE | Mise hors service | => 0 |
| CBE | Mise en service | => 1 |
| CBE | Option Tarifaire heures creuses (HC) | => 21 |
| CBE | Option Tarifaire heures pleines (HP) | => 22 |
| CBE | JBLEU_HC | => 23 |
| CBE | JBLEU_HP | => 24 |
| CBE | JBLANC_HC | => 25 |
| CBE | JBLANC_HP | => 26 |
| CBE | JROUGE_HC | => 27 |
| CBE | JROUGE_HP | => 28 |

| Type 17 : | | |
|---|---|---|
| Compteur Gaz | Mise hors service | => 0 |
| Compteur Gaz | Mise en service | => |
| Compteur Gaz | Relevé | => 2 |

| Type 18 : | | |
|---|---|---|
| Compteur | Eau Froide Hors en service | => 0 |
| Compteur | Eau Froide Mise en service | => 1 |
| Compteur | Eau Froide Relevé | => 2 |

| Type 19 : | | |
|---|---|---|
| Compteur | Eau Chaude Mise hors service | => o |
| Compteur | Eau Chaude Mise en service | => 1 |
| Compteur | Eau Chaude Relevé | => 2 |

| | | |
|---|---|---|
| (e-Boîte = boîte pour courrier électronique) | | |

### Glossaire

DCS 1800 :"Digital Communication System 1800 MHz
FTP :"File Transfer Protocol"
GSM :"Global System for Mobile Communication" (système global pour communication avec des mobiles)
HTTP :"Hyper Text Transfer Protocol"
IHM :Interface homme-machine
IP :"Internet Protocol"
ISP :"Internet Service Provider"
PAP :"Peer Authentification Protocol"
PPP : "Point to point Protocol"
RNIS :Réseau Numérique à Intégration de Services
RTC :Réseau Téléphonique Commuté
SMTP :"Service Mail Transfer Protocol
V.23 :Recommandation V23 livre bleu du CCITT : transmission par modulation à cohérence de phase
xDSL :"Digital Subscriber Line"

## Revendications

1. Procédé de mise en relation d'un utilisateur éloigné (11) avec un serveur domestique (12), au moyen des modules logiciels d'un dispositif serveur réseau (10) raccordé d'une part sur un réseau extérieur auquel est connecté cet utilisateur éloigné et d'autre part à un réseau de données (22) auquel est connecté ce serveur domestique (12), ce serveur domestique étant relié à des capteurs et/ou des actionneurs pour contrôler les équipements d'un réseau domestique (23), ce procédé comprenant les étapes suivantes pour le sens de l'utilisateur éloigné (11) vers le serveur domestique (12) :
- établissement d'une communication (30) entre cet utilisateur éloigné (11) et ce dispositif serveur réseau (10),
- à la réception de cet appel par le dispositif serveur réseau (10), demande d'authentification de l'utilisateur (31)
- identification par le dispositif serveur réseau (10) des paramètres de cet utilisateur ainsi que son contexte personnel (32),
- lorsque la liaison est établie, aboutement des liaisons entre l'utilisateur éloigné (11) et le serveur domestique (12), au travers d'une fonction d'adaptation qui traduit les requêtes de l'utilisateur en des informations compréhensibles par le serveur domestique (37 - 39),
**caractérisé en ce que** le réseau de données est le réseau Internet (22) et **en ce que** ce procédé comprend, en outre, les étapes suivantes :
- établissement d'une communication entre le dispositif serveur réseau (10) et le serveur domestique (12) en fonction de l'occupation des lignes et de la priorité de l'appel (33 - 35),
- à la réception d'un appel par le serveur domestique (12), analyse par celui-ci du numéro de l'appelant et prise de la ligne si ce numéro correspond au numéro du dispositif serveur réseau (36).

2. Procédé selon la revendication 1, comprenant les étapes suivantes pour le sens serveur domestique (12) vers le dispositif serveur réseau (10) :
- lorsqu'un capteur du réseau domestique (23) détecte un problème, transmission d'une demande de connexion au serveur domestique (12)
- établissement d'une communication vers le dispositif serveur réseau (10) (étapes 40 et 41),
- à la réception cet appel, contrôle de l'origine de l'appel par le dispositif serveur réseau (10),
- acceptation de cet appel en raccrochant éventuellement une communication moins prioritaire si tous les modems sont occupés (étape 42),
- détermination des adresses vers lesquelles doit être diffusé le message d'alarme et transmission de ce message (étapes 43 à 47).

3. Procédé selon la revendication 1, dans lequel la communication entre le dispositif serveur réseau (10) et le serveur domestique (12) étant établie, l'établissement d'une connexion s'effectue suivant un mode unique quelque soit l'origine de la communication : Le dispositif serveur réseau joue le rôle de serveur PPP (DHCP), et fournit une adresse du protocole Internet au serveur domestique, et dans lequel le dialogue entre le dispositif serveur réseau (10) et le serveur domestique (12) s'effectue par échange de messages SMTP dans le sens serveur domestique vers serveur réseau au travers d'une liaison au protocole Internet sur PPP ou de requêtes HTTP et FTP dans le sens serveur réseau vers serveur domestique.

4. Procédé selon la revendication 3, dans lequel dans le sens dispositif serveur réseau (10) vers réseau domestique (12) les demandes portent sur trois types d'actions :
• la commande,
• la demande d'état,
• la configuration.

5. Procédé selon la revendication 3, dans lequel dans le sens serveur domestique (12) vers dispositif serveur réseau (10), les demandes portent sur deux types d'actions :
• la notification d'événements relatifs au réseau domestique,
• l'accusé de réception.

6. Dispositif serveur réseau de mise en relation d'un utilisateur éloigné et d'un serveur domestique, relié d'une part au travers d'un réseau extérieur (21) à au moins un utilisateur éloigné (11) et d'autre part au travers d'un réseau de données (22) à au moins un serveur domestique (12) connecté à des capteurs et/ou des actionneurs pour contrôler les équipements d'un réseau domestique, comportant des modules logiciels, ce dispositif comprenant :
- des moyens d'établissement d'une communication (30) entre cet utilisateur éloigné (11) et ce dispositif serveur réseau (10),
- des moyens de demande d'authentification de l'utilisateur (31) à la réception de cet appel par le dispositif serveur réseau (10),
- des moyens d'identification par le dispositif serveur réseau (10) des paramètres de cet utilisateur ainsi que son contexte personnel (32),
- des moyens d'aboutement des liaisons entre l'utilisateur éloigné (11) et le serveur domestique (12), lorsque la liaison est établie, au travers d'une fonction d'adaptation qui traduit les requêtes de l'utilisateur en des informations compréhensibles par le serveur domestique (37 - 39),
**caractérisé en ce que** le réseau de données est le réseau Internet (22), et **en ce que** le dispositif comprend, en outre :
- des moyens d'établissement d'une communication entre le dispositif serveur réseau (10) et le serveur domestique (12) en fonction de l'occupation des lignes et de la priorité de l'appel (33 - 35),
- des moyens d'analyse par le serveur domestique, à la réception d'un appel par celui-ci, du numéro de l'appelant et de prise de la ligne si ce numéro correspond au numéro du dispositif serveur réseau (36).

## Claims

1. Method of connecting a remote user (11) with a home server (12), by means of the software modules of a network server device (10) connected on the one hand to an external network to which said remote user is connected and on the other hand to a data network (22) to which said home server (12) is connected, said home server being connected to sensors and/or actuators for monitoring the equipment of a home network (23), said method comprising the following steps for the direction of the remote user (11) to the home server (12):
- establishing a communication (30) between said remote user (11) and said network server device (10),
- on reception of said call by the network server device (10), request for user authentication (31),
- identification by the network server device (10) of said user's parameters as well as his personal environment (32),
- when the link is established, connect-through of the links between the remote user (11) and the home server (12), via an adaptation function that translates the user's requests into information comprehensible to the home server (37 - 39),
**characterized in that** the data network is the Internet (22) and **in that** said method further comprises the following steps:
- establishing a communication between the network server device (10) and the home server (12) according to line occupancy and call priority (33 - 35),
- on reception of a call by the home server (12), its analysis of the caller's number and pick up of the line if said number matches the number of the network server device (36).

2. Method according to Claim 1, comprising the following steps for the direction of the home server (12) to the network server device (10):
- when a home network (23) sensor detects a problem, transmission of a connection request to the home server (12),
- establishing a communication to the network server device (10) (steps 40 and 41),
- on reception of said call, verification of the origin of the call by the network server device (10),
- acceptance of said call by maybe hanging up, a lower priority communication if all the modems are busy (step 42),
- determination of the addresses to which the alarm message must be broadcast and transmission of said message (steps 43 to 47).

3. Method according to Claim 1, in which when the communication between the network server device (10) and the home server (12) is established, a connection takes place according to a single mode whatever the origin of the communication: The network server device acts as a PPP (DHCP) server, and supplies an Internet Protocol address to the home server, and in which the dialogue between the network server device (10) and the home server (12) takes place by exchange of SMTP messages in the direction of the home server to the network server via a link using the Internet Protocol over PPP or HTTP and FTP requests in the direction of the network server to the home server.

4. Method according to Claim 3, in which in the direction of the network server device (10) to the home network (12) the requests concern three types of actions:
• control,
• status request,
• configuration.

5. Method according to Claim 3, in which in the direction of the home server (12) to the network server (10), the requests concern two types of actions:
• notification of events related to the home network,
• acknowledgement of receipt.

6. Network server device for connecting a remote user and a home server, connected on the one hand via an external network (21) to at least one remote user (11) and on the other hand via a data network (22) to at least one home server (12) connected to sensors and/or actuators for monitoring the equipment of a home network, having software modules, said device comprising:
- means for establishing a communication (30) between said remote user (11) and said network server device (10),
- means for requesting authentication of the user (31) on reception of said call by the network server device (10),
- means for identifying by the network server device (10) of said user's parameters as well as his personal environment (32),
- means for connecting-through the links between the remote user (11) and the home server (12), when the link is established, via an adaptation function that translates the user's requests into information comprehensible to the home server (37 - 39),
**characterized in that** the data network is the Internet (22), and **in that** the device further comprises:
- means for establishing a communication between the network server device (10) and the home server (12) according to line occupancy and call priority (33 - 35),
- means for analysing the caller's number by the home server, when it receives a call, and pick up of the line if said number matches the number of the network server device (36).

## Patentansprüche

1. Verfahren zur Verknüpfung eines fernen Benutzers (11) mit einem Heimserver (12) mittels der Softwaremodule einer Netzwerkservervorrichtung (10), die einerseits an ein externes Netz, mit dem dieser ferne Benutzer verbunden ist, und andererseits an ein Datennetz (22) angeschlossen ist, mit dem dieser Heimserver (12) verbunden ist, wobei dieser Heimserver mit Sensoren und/oder Stellgliedern verbunden ist, um die Einrichtungen eines Hausnetzes (23) zu überprüfen, wobei dieses Verfahren die folgenden Schritte für die Richtung vom fernen Benutzer (11) zum Heimserver (12) aufweist:
- Aufbau einer Kommunikation (30) zwischen diesem fernen Benutzer (11) und dieser Netzwerkservervorrichtung (10),
- beim Empfang dieses Anrufs durch die Netzwerkservervorrichtung (10), Anforderung der Authentifizierung des Benutzers (31),
- Identifizierung der Parameter dieses Benutzers sowie seines persönlichen Kontexts (32) durch die Netzwerkservervorrichtung (10),
- wenn die Verbindung aufgebaut ist, Aneinanderfügen der Verbindungen zwischen dem fernen Benutzer (11) und dem Heimserver (12) über eine Anpassungsfunktion, die die Anfragen des Benutzers in für den Heimserver (37-39) verständliche Informationen umsetzt,
**dadurch gekennzeichnet, dass** das Datennetz das Internet (22) ist, und dass dieses Verfahren außerdem die folgenden Schritte aufweist:
- Aufbau einer Kommunikation zwischen der Netzwerkservervorrichtung (10) und dem Heimserver (12) in Abhängigkeit von der Belegung der Leitungen und der Priorität des Anrufs (33-35),
- bei Empfang eines Anrufs durch den Heimserver (12), Analyse der Nummer des Anrufers durch den Heimserver und Belegung der Leitung, wenn diese Nummer der Nummer der Netzwerkservervorrichtung (36) entspricht.

2. Verfahren nach Anspruch 1, das die folgenden Schritte für die Richtung vom Heimserver (12) zur Netzwerkservervorrichtung (10) aufweist:
- wenn ein Sensor des Hausnetzes (23) ein Problem erfasst, Übertragung einer Verbindungsanforderung an den Heimserver (12),
- Aufbau einer Kommunikation mit der Netzwerkservervorrichtung (10) (Schritte 40 und 41),
- bei Empfang dieses Anrufs, Überprüfung des Ursprungs des Anrufs durch die Netzwerkservervorrichtung (10),
- Annahme dieses Anrufs, indem möglicherweise eine weniger prioritäre Kommunikation aufgelegt wird, wenn alle Modems besetzt sind (Schritt 42),
- Bestimmung der Adressen, zu denen die Alarmmitteilung gesendet werden soll, und Übertragung dieser Mitteilung (Schritte 43 bis 47).

3. Verfahren nach Anspruch 1, bei dem nach dem Aufbau der Kommunikation zwischen der Netzwerkservervorrichtung (10) und dem Heimserver (12) der Aufbau einer Verbindung gemäß einem einzigen Modus erfolgt, unabhängig vom Ursprung der Kommunikation: die Netzwerkservervorrichtung dient als PPP-Server (DHCP) und liefert eine Adresse des Internet-Protokolls an den Heimserver, und bei dem der Dialog zwischen der Netzwerkservervorrichtung (10) und dem Heimserver (12) mittels Austausch von SMTP-Mitteilungen in Richtung vom Heimserver zum Netzwerkserver über eine Verbindung mit dem Internet-Protokoll auf PPP, oder von HTTP- und FTP-Anfragen in Richtung vom Netzwerkserver zum Heimserver erfolgt.

4. Verfahren nach Anspruch 3, bei dem in der Richtung von der Netzwerkservervorrichtung (10) zum Hausnetz (12) die Anfragen drei Typen von Aktionen betreffen:
• die Steuerung,
• die Zustandsanfrage,
• die Konfiguration.

5. Verfahren nach Anspruch 3, bei dem in der Richtung vom Heimserver (12) zur Netzwerkservervorrichtung (10) die Anfragen zwei Typen von Aktionen betreffen:
• die Ankündigung von Ereignissen betreffend das Hausnetz,
• die Empfangsbestätigung.

6. Netzwerkservervorrichtung zur Verknüpfung eines fernen Benutzers mit einem Heimserver, die einerseits über ein externes Netz (21) mit mindestens einem fernen Benutzer (11) und andererseits über ein Datennetz (22) mit mindestens einem Heimserver (12) verbunden ist, der mit Sensoren und/oder Stellgliedern verbunden ist, um die Einrichtungen eines Hausnetzes zu überprüfen, die Softwaremodule aufweist, wobei diese Vorrichtung aufweist:
- Mittel zum Aufbau einer Kommunikation (30) zwischen diesem fernen Benutzer (11) und dieser Netzwerkservervorrichtung (10),
- Mittel zur Anforderung der Authentifizierung des Benutzers (31) beim Empfang dieses Anrufs durch die Netzwerkservervorrichtung (10),
- Mittel zur Identifizierung der Parameter dieses Benutzers sowie seines persönlichen Kontexts (32) durch die Netzwerkservervorrichtung (10),
- Mittel zum Aneinanderfügen der Verbindungen zwischen dem fernen Benutzer (11) und dem Heimserver (12), wenn die Verbindung aufgebaut ist, über eine Anpassungsfunktion, die die Anforderungen des Benutzers in für den Heimserver verständliche Informationen umsetzt (37-39),
**dadurch gekennzeichnet, dass** das Datennetz das Internet (22) ist, und dass die Vorrichtung weiter aufweist:
- Mittel zum Aufbau einer Kommunikation zwischen der Netzwerkservervorrichtung (10) und dem Heimserver (12) in Abhängigkeit von der Belegung der Leitungen und der Priorität des Anrufs (33-35),
- Mittel zur Analyse der Nummer des Anrufers durch den Heimserver bei Empfang eines Anrufs durch diesen, und zur Belegung der Leitung, wenn diese Nummer der Nummer der Netzwerkservervorrichtung entspricht (36).
